**Europäisches Patentamt**

**European Patent Office**

**Office européen des brevets**

(19)

(11) Veröffentlichungsnummer: **0 115 047**
**B1**

(12) **EUROPÄISCHE PATENTSCHRIFT**

(45) Veröffentlichungstag der Patentschrift:
02.09.87

(51) Int. Cl.⁴: **G 06 F 15/20**

(21) Anmeldenummer: **83112980.4**

(22) Anmeldetag: **22.12.83**

(54) Verfahren und Anordnung zum Markieren von Textbereichen an einer Anzeigeeinheit.

(30) Priorität: **27.12.82 DE 3248191**

(43) Veröffentlichungstag der Anmeldung:
**08.08.84 Patentblatt 84/32**

(45) Bekanntmachung des Hinweises auf die Patenterteilung:
**02.09.87 Patentblatt 87/36**

(84) Benannte Vertragsstaaten:
**CH DE FR GB IT LI SE**

(56) Entgegenhaltungen:
**IBM TECHNICAL DISCLOSURE BULLETIN, Band 15, Nr. 5, October 1972, Seiten 1555-1556, New York, US; W.W. BOYD et al.: "Scale line for display attachment"**
**IBM TECHNICAL DISCLOSURE BULLETIN, Band 15, Nr. 7, Dezember 1972, Seite 2136, New York, US; G.T. WEBB: "Combination of alphanumeric and formatting data on CRT display"**
**IBM TECHNICAL DISCLOSURE BULLETIN, Band 25, Nr. 1, Juni 1982, Seiten 209-212, New York, US; G.R. HORN et al.: "Insertion of new columns and special handling rules for columns with no gutter"**

(73) Patentinhaber: **Siemens Aktiengesellschaft Berlin und München, Wittelsbacherplatz 2, D-8000 München 2 (DE)**

(72) Erfinder: **Westermayer, Jörg, Passauer Strasse 48, D-8000 München 70 (DE)**

EP 0 115 047 B1

## Beschreibung

Die Erfindung bezieht sich auf ein Verfahren zum Markieren von Textbereichen an einer Anzeigeeinheit einer Textstation, gemäß dem Oberbegriff des Patentanspruchs 1. Weiterhin bezieht sich die Erfindung auf eine Anordnung zur Durchführung des Verfahrens.

Es ist bereits allgemein bekannt, Textstationen mit einer Anzeigeeinheit zu versehen, an der ein mittels einer Tastatur eingegebener Text von einer Ausgabe mittels eines Druckwerks dargestellt wird. Als Anzeigeeinheiten sind Bildschirme üblich, an denen eine Vielzahl von Zeilen des Textes darstellbar ist. Es ist auch üblich, die Textstation mit einer Anzeigeeinheit zu versehen, an der ein Teil einer Zeile oder eine ganze Zeile darstellbar ist.

Falls die darzustellende Zeile nicht nur beliebigen Text darstellt, sondern auch eine bestimmte Gruppierung von Zeichen enthält, die spaltenweise untereinander anzuordnen ist, ist es bei der Verwendung einer Anzeigeeinheit für eine Zeile nicht ohne weiteres möglich, die Zeichen spaltenrichtig einzugeben. Es wäre denkbar, an der Anzeigeeinheit Tabelliermarken vorzusehen, die die jeweiligen Schreibstellen markieren. In diesem Fall ist das Setzen und Löschen von Tabelliermarken für sich nicht ständig im Text wiederholende Gruppierungen erforderlich, beispielsweise bei eingerückten zweizeiligen Titeln, postgerechten Anschriften o.ä.

Der Erfindung liegt daher die Aufgabe zugrunde, ein Verfahren und eine Anordnung zum Markieren von Textbereichen an einer Anzeigeeinheit anzugeben, unter deren Verwendung die Gestaltung eines Schriftstücks erleichtert wird und es auf einfache Weise ermöglicht wird, Gruppierungen von Zeichen, die sich über mehrere Zeilen erstrecken, spaltenrichtig und in siner ansprechenden Form darzustellen.

Erfindungsgemäß wird die Aufgabe bei dem Verfahren der eingangs genannten Art durch die im kennzeichnenden Teil des Patentanspruchs 1 angegebenen Merkmale gelöst.

Das Verfahren gemäß der Erfindung hat den Vorteil, daß es nur einen geringen Aufwand erfordert, da die Sonderzeichen als Punkte und/oder Striche innerhalb der für die Darstellung der Zeichen vorgesehenen Bereiche dargestellt werden können. Eine Orientierung ist sowohl hinsichtlich der vorangegangenen als auch der nachfolgenden Zeilen möglich, wenn die Sonderzeichen am oberen bzw. am unteren Rand der für die Darstellung der Zeichen vorgesehenen Bereiche dargestellt werden. Ein Setzen und Löschen der Tabelliermarken ist bei Gruppierungen nicht mehr erforderlich. Außerdem ist die Eingabe der Zeichen in vielen Fällen übersichtlicher.

Bei der Eingabe der Zeichen einer Zeile werden die entsprechenden Sonderzeichen gelöscht und durch die eingegebenen Zeichen überschrieben. Es ist jedoch auch möglich, die Sonderzeichen auch nach der Ein- gabe der Zeichen beizubehalten. Dies erweist sich beispielsweise dann als zweckmäßig, wenn eine vorgegebene Gruppierung einheitlich über mehrere Zeilen hinweg beibehalten werden soll, unabhängig davon, ob einige Zeilen Leerzeilen sind, die Gruppen nur teilweise Zeichen enthalten oder wenn während eines Korrekturvorgangs einzelne oder alle Zeichen einer Zeile gelöscht werden. Dies wird erreicht, wenn die Darstellung der Sonderzeichen beim Löschen einer Zeile erhalten bleibt.

Falls bei einer Darstellung von vollständigen Zeilen die Sonderzeichen als störend empfunden werden, können sie abgeschaltet oder gar nicht erst aufgerufen werden.

Bei einer vorteilhaften Anordnung zur Durchführung des Verfahrens ist eine Steuereinheit vorgesehen, die während des Auslesens eines der Anzeigeeinheit zugeordneten Speichers an denjenigen Stellen, an denen zuvor darstellbare Zeichen gespeichert waren, den Sonderzeichen zugeordnete Codewörter einspeichert. Hierzu enthält die Steuereinheit einen Vergleicher enthält, der während des Auslesens des Speichers das Auftreten von darstellbaren Zeichen überprüft. Die Steuereinheit und der Vergleicher werden zweckmäßigerweise durch einen entsprechend programmierten Mikrorechner realisiert.

Im folgenden werden das Verfahren und eine Anordnung zur Durchführung des Verfahrens anhand von Zeichnungen näher erläutert. Es zeigen

Fig. 1 eine Darstellung eines aus Zeichen gebildeten Textes und eine Darstellung von Sonderzeichen an einer Anzeigeeinheit,

Fig. 2 ein Blockschaltbild einer Anordnung zur Durchführung des Verfahrens.

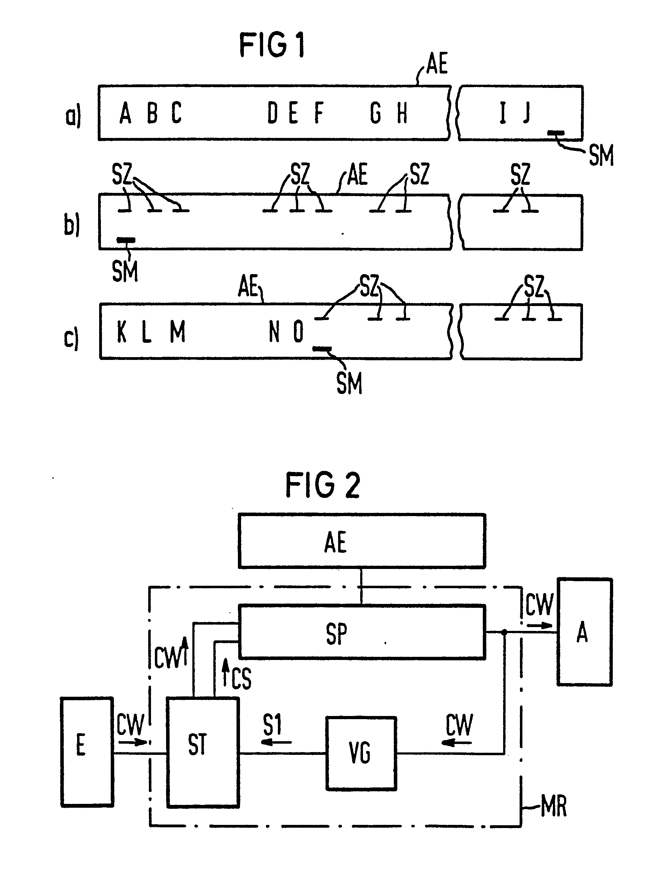

An einer in Fig. 1 bei a dargestellten Anzeigeeinheit AE wird ein aus dem Buchstaben A bis J gebildeter Text dargestellt. Die Anzeigeeinheit AE ist beispielsweise einzeilig ausgebildet. Der Buchstabe J ist das zuletzt eingegebene Zeichen und eine Schreibmarke SM kennzeichnet die nächste Schreibstelle an der Anzeigeeinheit AE. Die Buchstaben A bis J sind in vier Gruppen angeordnet, die den Text der Zeile bilden. Der Text kann aus Wörtern und/ oder Zahlen bestehen. Falls auch die nächstfolgende Zeile in der gleichen Gruppierung aufgebaut werden soll, ist es nach der Ausgabe des Textes und dem damit verbundenen Löschen des Inhalts der Anzeigeeinheit AE nicht ohne weiteres möglich, die Gruppen in entsprechender Weise anzuordnen.

Bei der in Fig. 1 bei b dargestellten Anzeigeeinheit AE werden nach dem Auslesen und Löschen der Zeile und vor der Eingabe der neuen Zeile an allen denjenigen Stellen, an denen zuvor die darstellbaren Zeichen A bis J dargestellt wurden, Sonderzeichen SZ dargestellt, um dem Bediener die Anordnung der einzelnen Gruppen der Zeichen der Zeile anzugeben. Wenn nun die nachfolgenden Zeichen eingegeben werden, können diese an die durch die Sonderzeichen SZ gekennzeichneten Stellen eingeschrieben werden.

Die Sonderzeichen SZ können als Punkte oder Striche oder sonstige Zeichen ausgebildet sein. Sie sind vorzugsweise innerhalb der für die Darstellung der Zeichen vorgesehenen Bereiche angeordnet. Die Sonderzeichen SZ können beispielsweise am oberen Rand dieser Bereiche dargestellt werden, um die Zuordnung zu einer vorangehenden Zeile zu verdeutlichen. In entsprechender Weise ist es auch möglich, diese Sonderzeichen BZ am unteren Rand der Bereiche darzustellen, um die Zuordnung zu nachfolgenden Zeilen zu verdeutlichen. Dies ist beispielsweise dann günstig, wenn innerhalb eines bestehenden Textes die Zeichen einer Zeile geändert werden.

Bei der Darstellung in Fig. 1 bei c wurde ein aus den Buchstaben K bis O gebildeter Text eingegeben. Die Schreibmarke SM kennzeichnet wieder die nächste Schreibstelle. An der Anzeigeeinheit AE wurden an denjenigen Stellen, an denen neue Zeichen eingegeben wurden, die entsprechenden Sonderzeichen SZ gelöscht, so daß diese nur noch in dem unbeschriebenen Teil der Anzeigeeinheit AE enthalten sind.

Es ist auch möglich, die Sonderzeichen SZ nach dem Beschreiben der Zeile nicht zu löschen, sondern diese über mehrere Zeilen hinweg beizubehalten. Dies erweist sich beispielsweise dann als zweckmäßig, wenn eine Zeile innerhalb des gruppierten Textes nur wenige Zeichen enthält oder wenn eine Leerzeile eingeschoben wird. Auch falls eine Zeile mindestens teilweise während eines Korrekturvorgangs gelöscht wird, sollen die sonderzeichen SZ beibehalten werden, um nach dem Löschen wieder die Möglichkeit zu haben, die Zeichen in derselben Gruppierung darzustellen. Eine Beibehaltung der Sonderzeichen SZ ist auch dann günstig, wenn durch sie ein vorgegebener Satzspiegel gekennzeichnet werden soll.

Falls die Darstellung der Sonderzeichen während der Eingabe von nicht gruppierten Texten als störend empfunden wird, ist es günstig, die Darstellung der Sonderzeichen SZ abschaltbar auszubilden.

Bei der in Fig. 2 dargestellten Anordnung zur Durchführung des Verfahrens werden die an der Anzeigeeinheit AE darzustellenden Zeichen mittels einer Eingabeeinheit E, beispielsweise einer Tastatur eingegeben. Die Zeichen gelangen von der Eingabeeinheit E in codierter Form als Codewörter CW über eine Steuereinheit ST zu einem der Anzeigeeinheit AE zugeordneten Speicher SP. Jeder Speicherzelle des Speichers SP ist ein bestimmter Bereich der Anzeigeeinheit AE zugeordnet. Wenn eine Zeile an der Anzeigeeinheit AE vollständig beschrieben ist und der Text dieser Zeile an einer Ausgabeeinheit A ausgegeben werden soll, wird beispielsweise an der Eingabeeinheit E eine Taste "Wagenrücklauf" betätigt und die Codewörter CW werden aus dem Speicher SP ausgelesen und zur Ausgabeeinheit A übertragen. Gleichzeitig wird die Anzeigeeinheit AE gelöscht. Die Codewörter CW gelangen jedoch zu einem Vergleicher VG, der bei jedem Codewort CW überprüft, ob dieses einem darstellbaren Zeichen zugeordnet ist. Wenn dies der Fall ist, gibt der Vergleicher VG ein Steuersignal S1 an die Steuereinheit ST ab, das dort die Erzeugung eines Codeworts CS veranlaßt, das einem Sonderzeichen SZ zugeordnet ist. Dieses Codewort CS wird an die entsprechende Stelle des Speichers SP eingespeichert, an der zuvor das Codewort CW für das darstellbare Zeichen gespeichert war. Wenn alle Codewörter CW ausgelesen wurden, sind im Speicher SP an denjenigen Stellen, an denen zuvor Codewörter CW gespeichert waren, die darstellbaren Zeichen zugeordnet sind, nun Codewörter CS gespeichert, die dem Sonderzeichen SZ zugeordnet sind. Dieses Sonderzeichen SZ wird nun an den entsprechenden Stellen an der Anzeigeeinheit AE dargestellt. Anschließend kann mit der Eingabe der Zeichen der neuen Zeile begonnen werden, wobei dem Benutzer die Positionen der einzelnen Gruppen dargestellt werden.

Der Vergleicher VG, die Steuereinheit ST und der Speicher SP sind üblicherweise in einem an sich bekannten Mikrorechner MR realisiert, der in entsprechender Weise programmiert ist.

**Patentansprüche**

1. Verfahren zum Markieren von Textbereichen an einer Anzeigeeinheit einer Textstation, bei der mittels einer Eingabeeinheit aus einer Mehrzahl von Zeichen gebildete Texte eingegeben werden und bei der die Texte zeilenweise an einer anzeigeeinheit dargestellt werden, dadurch gekennzeichnet , daß vor der Eingabe der Zeichen einer Zeile, an allen denjenigen Stellen dieser Zeile an denen in einer vorangehenden und/oder nachfolgenden Zeile des Textes Zeichen dargestellt waren, Sonderzeichen (SZ) an der Anzeigeeinheit (AE) automatisch dargestellt werden.

2. Verfahren nach Anspruch 1, dadurch gekennzeichnet, daß die Sonderzeichen (SZ) aus an der Anzeigeeinheit (AE) dargestellten Punkten oder Strichen bestehen.

3. Verfahren nach Anspruch 1 oder Anspruch 2, dadurch gekennzeichnet, daß die Sonderzeichen (SZ) am oberen und/oder unteren Rand der für die Darstellung der Zeichen vorgesehenen Bereiche an der Anzeigeeinheit dargestellt werden.

4. Verfahren nach einem der Ansprüche 1 bis 3, dadurch gekennzeichnet, daß die Sonderzeichen (SZ) während der Eingabe der Zeichen gelöscht werden.

5. Verfahren nach einem der Ansprüche 1 bis 3, dadurch gekennzeichnet, daß die Sonderzeichen (SZ) nach der Eingabe der Zeichen weiterhin dargestellt werden.

6. Verfahren nach einem der Ansprüche 1 bis 3, <u>dadurch gekennzeichnet</u>, daß die Sonderzeichen (SZ) beim Löschen von Zeichen erhalten bleiben.

7. Verfahren nach einem der Ansprüche 1 bis 6, <u>dadurch gekennzeichnet</u>, daß die Darstellung der Sonderzeichen (SZ) ein- bzw. ausschaltbar ist.

8. Anordnung zur Durchführung des Verfahrens nach Anspruch 1, bei der ein der Anzeigeeinheit zugeordneter Speicher vorgesehen ist, in dem die mittels der Eingabeeinheit eingegebenen Zeichen durch entsprechende Codewörter speicherbar sind und aus dem die Codewörter zur Darstellung der Zeichen an eine Ausgabeeinheit ausgebbar sind, <u>dadurch gekennzeichnet</u>, daß eine Steuereinheit (ST) vorgesehen ist, die während der Ausgabe der Codewörter (CW) an die Ausgabeeinheit (A) in diejenigen Stellen des Speichers (SP), in denen zuvor darstellbare Zeichen gespeichert waren, jeweils dem Sonderzeichen (SZ) zugeordnete Codewörter (CS) einspeichert.

9. Anordnung nach Anspruch 8, <u>dadurch gekennzeichnet</u>, daß ein Vergleicher (VG) vorgesehen ist, der während des Auslesens des Speichers (SP) beim Auftreten von den darstellbaren Zeichen zugeordneten Codewörtern (CW) jeweils ein dem Sonderzeichen (SZ) zugeordnetes Signal (S1) an die Steuereinheit (ST) abgibt.

10. Anordnung nach Anspruch 8 oder Anspruch 9, <u>dadurch gekennzeichnet</u>, daß die Steuereinheit (ST), der Vergleicher (VG) und der Speicher (SP) durch einen Mikrorechner (MR) realisiert sind.

(SZ) continue to be displayed after the input of the characters.

6. A method as claimed in one of the claims 1 to 5, <u>characterised in</u> that the special characters (SZ) remain when characters are erased.

7. A method as claimed in one of the claims 1 to 6, <u>characterised in</u> that the display of the special characters (SZ) can be switched on and off.

8. An arrangement for carrying out the method claimed in claim 1, where a store is provided which is assigned to the display unit, in which the charactrers input by means of the input unit can be stored by means of corresponding code words and from which the code words can be output to an output unit for the display of the characters, <u>characterised in</u> that a control unit (ST) is provided which, during the output of the code words (CW) to the output unit (A), inputs code words (CS), respectively assigned to the special characters (SZ), at those positions of the store (SP) at which displayable characters were previously stored.

9. An arrangement as claimed in claim 8, <u>characterised in</u> that a comparator (VG) is provided which, during the read-out of the store (SP), on the occurrence of code words (CW) assigned to the displayable characters, supplies the control unit (ST) with a signal (S1) assigned to the special character (SZ).

10. An arrangement as claimed in claim 8 or 9, <u>characterised in</u> that the control unit (ST), the comparator (VG) and the store (SP) are embodied by a microcomputer (MR).

## Claims

1. A method of marking text sections on a display unit of a text station, where texts composed of a plurality of characters are input by means of an input unit and where the texts are displayed line by line on a display unit, <u>characterised in</u> that prior to the input of the characters of a line, special characters (SZ) are automatically displayed on the display unit (AE) at all those points of this line at which characters were displayed in a preceding and/or following line of the text.

2. A method as claimed in claim 1, <u>characterised in</u> that the special characters (SZ) comprise dots or lines displayed on the display unit (AE).

3. A method as claimed in claim 1 or claim 2, <u>characterised in</u> that the special characters (SZ) are displayed at the upper and/or lower edge of those sections of the display unit provided for the display of the characters.

4. A method as claimed in one of the claims 1 to 3, <u>characterised in</u> that the special characters (SZ) are erased during the input of the characters.

5. A method as claimed in one of the claims 1 to 3, <u>characterised in</u> that the special characters

## Revendications

1. Procédé pour marquer des parties de texte sur une unité d'affichage d'un poste de traitement de texte, dans lequel on introduit des textes formés d'une multiplicité de caractères, au moyen d'une unité d'introduction et dans lequel les textes sont représentés ligne par ligne sur l'unité d'affichage, caractérisé par le fait qu'avant l'introduction des caractères d'une ligne, des caractères particuliers (SZ) sont représentés de façon automatique sur l'unité d'affichage (AE) en tous les emplacements de cette ligne, au niveau desquels des caractères étaient représentés sur une ligne précédente et/ou suivante du texte.

2. Procédé suivant la revendication 1, caractérisé par le fait que les caractères particuliers (SZ) sont constitués par des points ou des traits représentés sur l'unité d'affichage (AE).

3. Procédé suivant la revendication 1 ou 2, caractérisé par le fait que les caractères particuliers (SZ) sont représentés sur le bord supérieur et/ou sur le bord inférieur des zones, prévues pour la représentation des caractères, sur l'unité d'affichage.

4. Procédé suivant l'une des revendications 1 à 3, caractérisé par le fait que les caractères particuliers (SZ) sont effacés pendant l'introduction des caractères.

5. Procédé suivant l'une des revendications 1 à 3, caractérisé par le fait que les caractères particuliers (SZ) sont en outre représentés après l'introduction des caractères.

6. Procédé suivant l'une des revendications 1 à 5, caractérisé par le fait que les caractères particuliers (SZ) restent maintenus lors de l'effacement de caractères.

7. Procédé suivant l'une des revendications 1 à 6, caractérisé par le fait que la représentation des caractères particuliers (SZ) peut être déclenchée ou interrompue.

8. Dispositif pour la mise en oeuvre du procédé suivant la revendication 1, selon lequel il est prévu une mémoire associée à l'unité d'affichage et dans laquelle les caractères introduits au moyen de l'unité d'introduction sont mémorisés au moyen de mots de code correspondants et à partir de laquelle les mots de code peuvent être délivrés à une unité d'affichage en vue de la représentation des caractères, caractérisé par le fait qu'il est prévu une unité de commande (ST), qui mémorise des mots de code (CS) respectivement associés aux caractères particuliers (SZ), pendant la délivrance des mots de code (CW) à l'unité de sortie (A), aux emplacements de la mémoire (SP), au niveau desquels des caractères pouvant être représentés étaient antérieurement mémorisés.

9. Dispositif suivant la revendication 8, caractérisé par le fait qu'il est prévu un comparateur (VG) qui, pendant la lecture de la mémoire (SP) délivre respectivement un signal (S1), associé aux caractères particuliers (SZ), à l'unité de commande (ST), lors de l'apparition de mots de code (CW) associés aux caractères pouvant être représentés.

10. Dispositif suivant la revendication 8 ou 9, caractérisé par le fait que l'unité de commande (ST), le comparateur (VG) et la mémoire (SP) sont réalisés au moyen d'un micro-ordinateur (MR).

## FIG 1

a)

| A B C | D E F | G H | | I J |

AE

SM

b)

SZ SZ AE SZ SZ

SM

c)

AE SZ SZ

K L M | N O

SM

## FIG 2

AE

SP

E

ST

VG

A

CW

CW

CS

CW

S1

CW

MR